# EUROPÄISCHE PATENTANMELDUNG

(11) **EP 4 289 771 A1**
(43) Veröffentlichungstag der Anmeldung: **13.12.2023**
(21) Anmeldenummer: 23176611.4
(22) Anmeldetag: 01.06.2023
(51) Int. Cl.: B65G 47/08, B65G 47/26, B65G 47/90, B65G 54/02, B65B 21/06

(54) **VORRICHTUNG ZUM FÖRDERN VON BEHÄLTERN UND DEREN VERWENDUNG**

(30) Priorität: 08.06.2022 DE 102022114419
(71) Anmelder: KRONES AG, 93073 Neutraubling (DE)
(72) Erfinder: NEUBAUER, Michael, 93073 Neutraubling (DE)
(74) Vertreter: v. Bezold & Partner Patentanwälte - PartG mbB

(57) **Zusammenfassung**

Die Erfindung betrifft u.a. eine Vorrichtung (18) zum Fördern von Behältern (12) für eine Behälterbehandlungsanlage (10). Die Vorrichtung (18) weist einen ersten, vorzugsweise umlaufenden, Behälterförderer (20), einen zweiten, vorzugsweise umlaufenden, Behälterförderer (22), der mehrere, vorzugweise plattenförmige, Träger (28) zum Transportieren der Behälter (12) aufweist, und eine Transferstation (24), mittels der die Behälter (12) von dem ersten Behälterförderer (20) entnehmbar und auf den mehreren Trägern (28) des zweiten Behälterförderers (22) positionierbar sind, auf. Vorteilhaft kann die Vorrichtung (18) einen sicheren Transport von nicht standfesten Behältern (12) und eine Pufferung dieser Behälter (12) mittels der Träger (28) ermöglichen.

## Beschreibung

### Technisches Gebiet

Die Erfindung betrifft eine Vorrichtung zum Fördern von Behältern und eine Behälterbehandlungsanlage mit einer Vorrichtung zum Fördern von Behältern. Die Erfindung betrifft ferner eine Verwendung einer Vorrichtung zum Fördern von Behältern oder einer Behälterbehandlungsanlage mit einer Vorrichtung zum Fördern von Behältern.

### Technischer Hintergrund

Anlagen zur Abfüllung und Verpackung von flüssigen Produkten (z.B. Getränke, Körperpflegeprodukte, Reinigungsmittel, ...) weisen im Allgemeinen mehrere Maschinen auf, die von den Behältern nacheinander durchlaufen werden. Die Maschinen können z. B. eine Streckblasmaschine, eine Flaschenwaschmaschine, einen Füller, eine Etikettiermaschine, einen Packer oder einen Palettierer aufweisen.

Herkömmlich werden häufig Transportbänder eingesetzt, um die Behälter von einer Maschine zur nächsten Maschine zu transportieren. Diese Transportbänder können mehrere Aufgaben haben. Dazu gehört der Transport von der Maschine zu der nächsten Maschine an sich. Außerdem können Transportbänder auch als Puffer fungieren. Meist handelt es sich dabei um breite Transportbänder (Breite des Transportbands ist deutlich größer als die Breite der Behälter), auf denen viele Behälter im Massentransport aufgestaut werden können.

Mit der herkömmlichen Technik können nicht standsichere Behälter, z. B. aus der Kosmetik oder Gesundheitspflege, nur mit Einschränkungen transportiert werden. So können beispielsweise nur standsichere Behälter auf Transportbändern transportiert und gepuffert werden. Bei nicht standsicheren Formbehältern, wie sie beispielsweise für Duschgels o.Ä. verwendet werden, besteht im Massentransport eine hohe Umfallgefahr. Die Fördergeschwindigkeit muss deutlich reduziert werden, was ebenfalls zu einer deutlichen Reduzierung der Leistung der Anlage führt.

In den meisten Behandlungsmaschinen werden die Behälter einspurig, d.h. einer nach dem anderen, hintereinander behandelt. Befindet sich ein Massentransport vor einer solchen Maschine, so ist eine Vereinzelungsstrecke nötig, um die Behälter vom breiten Massentransporteur auf eine Spur zusammenzuführen. Diese Vereinzelung ist platz- und kostenintensiv.

Zwischen dem Nass- und Trockenteil der Anlage, also meist zwischen Etikettiermaschine und Packmaschine, ist in vielen Fällen ein Massentransport vorgesehen. Dieser bietet den Vorteil, im Falle einer Störung der Packmaschine eine gewisse Anzahl von Behältern puffern zu können. Dies kann z. B. wichtig sein, um den Heizofen einer Streckblasmaschine trotz Produktionsstillstand nachfolgender Maschinen leerfahren zu können, um eine Zerstörung der im Ofen befindlichen Preforms zu vermeiden. Die Zuläufe heutiger Packmaschinen benötigen zudem häufig einen gassengeführten Zulauf, d.h. die Behälter müssen in mehreren Reihen nebeneinander in die Maschine einlaufen. Um von einem Massentransport in einen gassengeführten Zulauf zu kommen, sind weitere Vorrichtungen erforderlich, z. B. eine Eindrängelstrecke in der die Behälter aus dem Massenstrom in einzelne Gassen geführt werden. Dies ist ein Bereich, in dem viele Störungen durch klemmende oder umgefallene Behälter auftreten können.

Die WO 2017/001750 A1 offenbart eine Vorrichtung zur Formung von Produkten, umfassend einerseits ein Formungsmodul, in dem die Produkte durch Bündelung und Verpackung in Kisten zu Chargen geformt werden, und andererseits ein Förderband, das sich in eine Förderrichtung erstreckt, um das Formungsmodul mit Chargen von Produkten zu versorgen. Die Vorrichtung weist ferner ein Zuführmittel auf, das die Produkte auf dem Förderband von einer stromaufwärtigen Station der Formungsvorrichtung zuführt, und das sich zumindest teilweise in mindestens einer seitlichen Zone erstreckt, die die Formungsvorrichtung neben dem Förderband aufweist.

Die US 2021/0331821 A1 offenbart ein Verpackungssystem umfassend eine erste Übergabestation zur Aufnahme einer Vielzahl von Produkten, eine Bereitstellungsstation mit einer Bahn und einer Vielzahl von Shuttle-Elementen, die so konfiguriert sind, dass sie sich entlang eines durch die Bahn definierten Weges bewegen, und eine zweite Übergabestation mit einem Roboterarm, der mit einer Vielzahl von Greifelementen gekoppelt ist. Die mehreren Greifelemente können so konfiguriert sein, dass sie die mehreren Produkte von einem oder mehreren der mehreren Shuttle-Elemente aufnehmen.

Der Erfindung liegt die Aufgabe zu Grunde, eine verbesserte Vorrichtung zum Fördern von Behältern zu schaffen, mit der vorzugsweise auch nicht standsichere Behälter schnell und sicher und bevorzugt pufferbar gefördert werden können.

### Zusammenfassung der Erfindung

Die Aufgabe wird gelöst durch die Merkmale der unabhängigen Ansprüche. Vorteilhafte Weiterbildungen sind in den abhängigen Ansprüchen und der Beschreibung angegeben.

Ein Aspekt der vorliegenden Offenbarung betrifft eine Vorrichtung zum Fördern von Behältern für eine Behälterbehandlungsanlage. Die Vorrichtung weist einen ersten, vorzugsweise umlaufenden, Behälterförderer und einen zweiten, vorzugsweise umlaufenden, Behälterförderer, der mehrere, vorzugweise plattenförmige, Träger zum Transportieren der Behälter aufweist, auf. Die Vorrichtung weist ferner eine Transferstation auf, mittels der die Behälter von dem ersten Behälterförderer entnehmbar und auf den mehreren Trägern des zweiten Behälterförderers positionierbar sind.

Vorteilhaft kann die Vorrichtung einen zuverlässigen Transport auch von nicht standfesten oder staufähigen Behältern mittels der Träger des zweiten Behälterförderers ermöglichen. Die Träger können das Risiko eines Umfallens deutlich reduzieren. Zudem kann ein Puffern nicht staufähiger Behälter einfach mittels der Träger des zweiten Behälterförderers realisierbar sein. Die Behälter können mittels der Träger immer geführt und dadurch aufstaubar sein. Eine Eindrängelstrecke kann entfallen, da die Behälter bevorzugt schon durch die Träger in der benötigten Formation stromabwärts des zweiten Behälterförderers ankommen können, z. B. bei einer Verpackungsmaschine. Damit kann auch eine separate Gruppierung der Behälter vor der Verpackungsmaschine entfallen. Gegenüber den herkömmlichen Techniken kann die Vorrichtung auch besonders bauraumsparend sein und bspw. nur eine deutlich verringerte Anlagenstellfläche aufweisen. Vorteilhaft können die Träger auch dazu beitragen, eine Anzahl von erforderlichen Formatteilen zu reduzieren, da ein Träger eine Vielzahl von Formatteilen ersetzen kann. Ein weiterer Vorteil kann in der Nachverfolgbarkeit der Behälter bestehen, da auf einen Massentransport verzichtet wird. Jeder Behälter kann gezielt verfolgt werden.

In einem Ausführungsbeispiel weisen die mehreren Träger jeweils mehrere Behälteraufnahmen zum Aufnehmen mehrerer der Behälter auf (z. B. eine Behälteraufnahme je aufzunehmenden Behälter), wobei vorzugsweise eine Anzahl der mehreren Behälteraufnahmen ≥ 2, ≥ 3, ≥ 4, ≥ 5, ≥ 6 oder ≥ 10 ist. Vorteilhaft können damit mehrere Behälter je Träger standsicher transportiert werden, bevorzugt bereits in einer Formation, die von einer stromabwärts angeordneten Verpackungsvorrichtung erfordert wird.

Vorzugsweise können die mehreren Behälteraufnahmen alle gleich oder zumindest teilweise unterschiedlich ausgebildet, z. B. dimensioniert und/oder geformt, sein.

In einem weiteren Ausführungsbeispiel weisen die mehreren Behälteraufnahmen eine oder mehrere, vorzugsweise gruppierte, erste Behälteraufnahmen und eine oder mehrere, vorzugsweise gruppierte, zweite Behälteraufnahmen auf. Die eine oder die mehreren ersten Behälteraufnahmen einerseits und die eine oder die mehreren zweiten Behälteraufnahmen andererseits können unterschiedlich zueinander ausgebildet, vorzugsweise dimensioniert und/oder geformt, sein. Vorteilhaft können damit je Träger auch unterschiedliche Behälterformate transportiert werden, wodurch eine Behälterformatumstellung auf einfache Weise ohne aufwendiges Umrüsten des zweiten Behälterförderers erfolgen kann.

Vorzugsweise können je Träger die mehreren ersten Behälteraufnahmen und die mehreren zweiten Behälteraufnahmen an der gleichen Seite (z. B. Oberseite) des jeweiligen Trägers angeordnet sein, z. B. gruppiert nebeneinander. Alternativ können die mehreren ersten Behälteraufnahmen und die mehreren zweiten Behälteraufnahmen an unterschiedlichen Seiten des jeweiligen Trägers angeordnet sein, z. B. an einer Oberseite und an einer Unterseite des jeweiligen Trägers.

In einem weiteren Ausführungsbeispiel sind die mehreren Behälteraufnahmen als Vertiefungen oder Ausnehmungen in einer Oberseite des jeweiligen Trägers ausgebildet.

Vorzugsweise können die mehreren Behälteraufnahmen jeweils zur Aufnahme einer Standfläche oder Basis der Behälter geformt sein.

In einem weiteren Ausführungsbeispiel weist der zweite Behälterförderer ein umlaufendes Förderelement, vorzugsweise Förderband, Fördergurt, Förderriemen oder Förderkette, auf. Die mehreren Träger können auf dem Förderelement getragen sein, vorzugsweise lose aufliegend, pufferbar und/oder aufstaubar. Vorteilhaft kann der zweite Behälterförderer somit konstruktiv besonders einfach und kostengünstig aufgebaut sein und dennoch eine Pufferung ermöglichen, da die Träger mit den Behältern mittels des Förderelements auf Stau gefahren werden können.

In einer Ausführungsform sind die mehreren Träger als Pucks, vorzugsweise Gebindepucks, ausgeführt. Alternativ oder zusätzlich sind die mehreren Träger von dem zweiten Behälterförderer pufferbar und/oder aufstaubar. Alternativ oder zusätzlich ist der zweite Behälterförderer als ein Pufferförderer zum wahlweisen Aufstauen der mehreren Träger und Lösen eines Staus aus den mehreren Trägern ausgebildet. Alternativ oder zusätzlich weist der zweite Behälterförderer eine Pufferstrecke auf, vorzugsweise stromabwärts der Transferstation. Alternativ oder zusätzlich ist eine Transportstreckenlänge des zweiten Behälterförderers größer, vorzugsweise mindestens 50 %, mindestens 70 % oder mindestens 100 % größer, als eine Transportstreckenlänge des ersten Behälterförderers. Vorteilhaft kann damit eine Pufferung der Behälter auf dem zweiten Behälterförderer ermöglicht werden.

In einer weiteren Ausführungsform sind die mehreren Träger unabhängig voneinander bewegbar. Alternativ oder zusätzlich kann der zweite Behälterförderer als ein Langstator-Linearantrieb-Förderer, ein Kurzstator-Linearantrieb-Förderer oder ein Planarmotor-Förderer ausgebildet sein, und die mehreren Träger können als unabhängig voneinander bewegbare Bewegungsvorrichtungen des Langstator-Linearantrieb-Förderers, des Kurzstator-Linearantrieb-Förderers oder des Planarmotor-Förderers ausgebildet sein. Dies kann vorteilhaft ermöglichen, dass die Träger individuell bewegt und gesteuert werden können. Ein weiterer Vorteil kann darin bestehen, dass die Träger mit den Behältern in einer Verpackungsvorrichtung sehr exakt platziert werden oder sogar unterschiedliche Stationen anfahren können. Ebenfalls kann ein kurzzeitiges Rückwärtsfahren möglich sein. Der Planarmotor-Förderer bietet in diesem Zusammenhang eine noch größere Flexibilität hinsichtlich Bewegung, Positionierung und Umrüstung.

In einer weiteren Ausführungsform sind die mehreren Träger, vorzugsweise werkzeuglos, austauschbar. Alternativ oder zusätzlich können die mehreren Trägern mittels der Transferstation aus dem zweiten Behälterförderer entnehmbar und vorzugsweise zu einer Parkstation oder einem fahrerlosen Transportfahrzeug transportierbar sein. Alternativ oder zusätzlich sind die mehreren Träger mittels der Transferstation an dem zweiten Behälterförderer positionierbar, vorzugsweise übernommen von einer Parkstation oder einem fahrerlosen Transportfahrzeug. Vorteilhaft kann damit eine Konstruktion bereitgestellt werden, die möglichst wenige Rüstteile benötigt. Für Rüstteile, die nur schwer vermeidbar sind, wie z. B. behälterspezifische Träger, können Verfahren zum schnellen Wechsel verwendet werden. So können bei einer Behälterformatumstellung oder Verpackungsformatumstellung die Träger bevorzugt vollautomatisch mittels der Transferstation von dem zweiten Behälterförderer entfernt werden. Die entfernten Träger können in ein Lager abtransportiert werden, z. B. mittels des fahrerlosen Transportfahrzeugs. Ebenfalls können neue Träger, die das gewünschte Format aufweisen, vorzugsweise mittels des fahrerlosen Transportfahrzeugs angeliefert und von der Transferstation auf den zweiten Behälterförderer gesetzt werden.

In einer Ausführungsvariante ist die Transferstation dazu ausgebildet, die Behälter von dem ersten Behälterförderer zu greifen und die gegriffenen Behälter auf den Trägern zu positionieren. Alternativ oder zusätzlich kann die Transferstation dazu ausgebildet sein, die von dem ersten Behälterförderer entnommenen Behälter in eine vorgebbare Orientierung neu auszurichten und optional in der vorgebbaren Orientierung auf den mehreren Trägern zu positionieren. Alternativ oder zusätzlich kann die Transferstation dazu ausgebildet sein, in einem Arbeitszyklus mehrere der Behälter, vorzugsweise gleichzeitig, von dem ersten Behälterförderer zu entnehmen und die entnommenen Behälter, vorzugsweise gleichzeitig, auf mehrere der Träger zu positionieren, vorzugsweise gleichzeitig. Vorzugsweise kann damit eine Flexibilität und Leistung der Vorrichtung gesteigert werden.

In einer weiteren Ausführungsvariante weist die Transferstation mindestens eine Robotervorrichtung, vorzugsweise Knickarmrobotervorrichtung, Deltarobotervorrichtung oder Scararobotervorrichtung, zum Entnehmen der Behälter von dem ersten Behälterförderer und zum Positionieren der Behälter auf den mehreren Trägern des zweiten Behälterförderers auf. Optional kann die mindestens eine Robotervorrichtung einen Greifer zum Ergreifen eines oder mehrerer der Behälter von dem ersten Behälterförderer aufweisen.

In einem Ausführungsbeispiel weist die mindestens eine Robotervorrichtung mehrere (z. B. zwei oder drei) Robotervorrichtungen auf, die vorzugsweise nebeneinander angeordnet sind, bevorzugt parallel zu einer Längsachse des ersten Behälterförderers und/oder einer Längsachse des zweiten Behälterförderers.

In einem weiteren Ausführungsbeispiel weist die Vorrichtung ferner eine Steuereinrichtung auf, die dazu konfiguriert ist, die mehreren Robotervorrichtungen derart zu betreiben, dass mindestens zwei der mehreren Robotervorrichtungen jeweils mindestens einen Behälter auf einen gemeinsamen Träger der mehreren Träger positionieren. Alternativ oder zusätzlich kann die Steuereinrichtung dazu konfiguriert sein, dass die mehreren Robotervorrichtungen jeweils in einem Arbeitszyklus mehrere der Behälter, vorzugsweise gleichzeitig, von dem ersten Behälterförderer entnehmen und die entnommenen Behälter, vorzugsweise gleichzeitig, auf mehrere der Träger positionieren. Vorteilhaft kann damit eine möglichst gleichmäßige Belastung der Robotervorrichtungen und eine möglichst kontinuierliche Beladung der Träger z. B. während einer im Wesentlichen konstanten Fahrt der Träger entlang des zweiten Behälterförderers erreicht werden.

Vorzugsweise kann sich der Begriff "Steuereinrichtung" auf eine Elektronik (z. B. ausgeführt als eine Treiberschaltung oder mit Mikroprozessor(en) und Datenspeicher) beziehen, die je nach Ausbildung Steuerungsaufgaben und/oder Regelungsaufgaben und/oder Verarbeitungsaufgaben übernehmen kann. Auch wenn hierin der Begriff "Steuern" verwendet wird, kann damit gleichsam zweckmäßig auch "Regeln" bzw. "Steuern mit Rückkopplung" und/oder "Verarbeiten" umfasst bzw. gemeint sein.

In einer Ausführungsform ist der erste Behälterförderer als ein Langstator-Linearantrieb-Förderer, ein Kurzstator-Linearantrieb-Förderer oder ein Planarmotor-Förderer ausgebildet. Alternativ oder Zusätzlich kann der erste Behälterförderer dazu ausgebildet sein, einen Relativabstand der von dem ersten Behälterförderer transportierten Behälter anzupassen, vorzugsweise zum Einnehmen eines vorgebbaren Relativabstands zwischen benachbarten Behältern. Vorteilhaft kann der erste Behälterförderer die Behälter in einen für einen im nachfolgenden Schritt günstigen Teilungsabstand bringen. Lücken im Behälterstrom zum Beispiel wegen Ausschleusen von Behältern stromaufwärts von dem ersten Behälterförderer (z. B. bei der Etikettiervorrichtung) können geschlossen werden.

Es ist möglich, dass ein Behälterübergabeabschnitt des ersten Behälterförderers, aus dem die Behälter mittels der Transferstation entnehmbar sind, und ein Behälterübernahmeabschnitt des zweiten Behälterförderers, in dem die Behälter mittels der Transferstation auf den mehreren Trägern positionierbar sind, sich parallel zueinander erstrecken und/oder einander entgegengesetzte Förderrichtungen aufweisen. Vorteilhaft kann damit ein besonders schneller Behältertransfer mittels der Transferstation ermöglicht werden.

Ein weiterer Aspekt der vorliegenden Offenbarung betrifft eine Behälterbehandlungsanlage mit einer Vorrichtung zum Fördern von Behältern wie hierin offenbart. Die Behälterbehandlungsanlage kann vorzugsweise eine Etikettiervorrichtung zum Etikettieren der Behälter aufweisen, die, vorzugsweise direkt, stromaufwärts von dem ersten Behälterförderer angeordnet ist. Alternativ oder zusätzlich kann die Behälterbehandlungsanlage beispielsweise eine Verpackungsvorrichtung zum Verpacken der Behälter aufweisen, die, vorzugsweise direkt, stromabwärts von dem zweiten Behälterförderer angeordnet und bevorzugt dazu ausgebildet ist, die Behälter in dem durch die mehreren Träger vorgegebenen Format in Gruppen (z. B. Gebinden) zu verpacken. Vorteilhaft können mit der Behälterbehandlungsanlage die gleichen Vorteile erzielt werden, die bereits unter Bezugnahme auf die Vorrichtung zum Fördern von Behältern erläutert wurden.

Vorzugsweise kann die Behälterbehandlungsanlage zum Herstellen, Reinigen, Beschichten, Prüfen, Abfüllen, Verschließen, Etikettieren, Dekorieren, Bedrucken und/oder Verpacken von Behältern für flüssige Medien, vorzugsweise Getränke, flüssige Nahrungsmittel, Reinigungsmittel, Kosmetikprodukte oder Pflegeprodukte, ausgebildet sein.

Beispielsweise können die Behälter als Flaschen, Dosen, Kanister, Kartons, Flakons usw. ausgeführt sein.

Ein weiterer Aspekt der vorliegenden Offenbarung betrifft eine Verwendung einer Vorrichtung wie hierin offenbart oder einer Behälterbehandlungsanlage wie hierin offenbart zum Fördern von Behältern, wobei vorzugsweise die Behälter jeweils eine (z. B. ovale) Standfläche aufweisen, die länglich ist, wobei beispielsweise eine Länge der Standfläche der Behälter mindestens 50 %, mindestens 70 % oder mindestens 100 % größer als eine Breite der Standfläche der Behälter ist. Vorteilhaft können mit der Verwendung die gleichen Vorteile erzielt werden, die bereits unter Bezugnahme auf die Vorrichtung zum Fördern von Behältern erläutert wurden.

Die zuvor beschriebenen bevorzugten Ausführungsformen und Merkmale der Erfindung sind beliebig miteinander kombinierbar.

### Kurzbeschreibung der Figuren

Weitere Einzelheiten und Vorteile der Erfindung werden im Folgenden unter Bezug auf die beigefügten Zeichnungen beschrieben. Es zeigen:
- Figur 1: eine perspektivische Ansicht eines Abschnitts einer Behälterbehandlungsanlage gemäß einem Ausführungsbeispiel der vorliegenden Offenbarung;
- Figur 2: eine perspektivische Ansicht einer Vorrichtung zum Fördern von Behältern gemäß einem Ausführungsbeispiel der vorliegenden Offenbarung;
- Figur 3: eine Draufsicht auf die beispielhafte Vorrichtung zum Fördern von Behältern;
- Figur 4: eine Schemadarstellung zur Erläuterung eines beispielhaften Betriebs einer Transferstation der beispielhaften Vorrichtung zum Fördern von Behältern; und
- Figur 5: eine Schemadarstellung zur Erläuterung eines weiteren beispielhaften Betriebs einer Transferstation der beispielhaften Vorrichtung zum Fördern von Behältern;

Die in den Figuren gezeigten Ausführungsformen stimmen zumindest teilweise überein, so dass ähnliche oder identische Teile mit den gleichen Bezugszeichen versehen sind und zu deren Erläuterung auch auf die Beschreibung der anderen Ausführungsformen bzw. Figuren verwiesen wird, um Wiederholungen zu vermeiden.

### Detaillierte Beschreibung beispielhafter Ausführungsformen

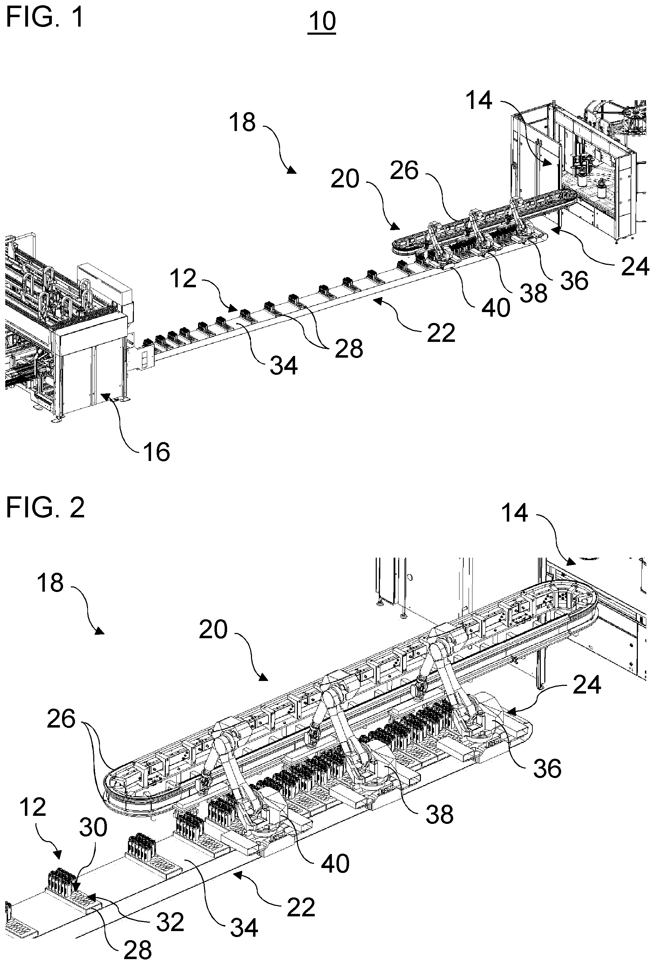

Die Figur 1 zeigt einen Abschnitt einer Behälterbehandlungsanlage 10. In der Behälterbehandlungsanlage 10 können Behälter 12 behandelt werden. Vorzugsweise kann eine Basis bzw. eine Standfläche der Behälter 12 länglich sein, z. B. oval oder im Wesentlichen rechteckig mit abgerundeten Ecken. Beispielsweise kann eine Länge der Standfläche der Behälter 12 mindestens 50 %, mindestens 70 % oder mindestens 100 % größer sein als eine Breite der Standfläche der Behälter 12. Die Behälter 12 können daher eine erhöhte Kippneigung um eine Längsachse der Basis bzw. Standfläche aufweisen.

Die Behälterbehandlungsanlage 10 weist eine Vorrichtung 18 zum Fördern und vorzugsweise Puffern der Behälter 12 auf. Optional kann die Behälterbehandlungsanlage 10 eine Etikettiervorrichtung 14 und/oder eine Verpackungsvorrichtung 16 aufweisen.

Die Etikettiervorrichtung 14 kann (behälter-) stromaufwärts von der Vorrichtung 18 angeordnet sein. Stromaufwärts von der Etikettiervorrichtung 14 kann bspw. noch eine Füllvorrichtung zum Füllen der Behälter 12 und/oder eine Verschließvorrichtung zum Verschließen der Behälter 12 angeordnet sein.

Die Etikettiervorrichtung 14 kann die Behälter 12 etikettieren. Die Etiketten können bspw. selbstklebend sein, aufgeschrumpft werden oder mittels eines Klebstoffs (z. B. Leim) auf die Behälter 12 appliziert werden. Die Etikettiervorrichtung 14 kann beispielsweise als eine Linear-Etikettiervorrichtung oder - wie in Figur 1 dargestellt ist - als eine Rundläufer-Etikettiervorrichtung ausgebildet sein.

Die Verpackungsvorrichtung 16 kann (behälter-) stromabwärts von der Vorrichtung 18 angeordnet sein.

Die Verpackungsvorrichtung 16 kann die Behälter 12 verpacken, vorzugsweise in Gebinden aus jeweils mehreren Behältern 12. Bevorzugt kann die Verpackungsvorrichtung 16 die Behälter 12 in einem Format bzw. einer Gruppierweise von der Vorrichtung 18 empfangen, die einem von der Verpackungsvorrichtung 16 verwendeten Verpackungsformat bzw. Gebindeformat entspricht.

Die Vorrichtung 18 ist in den Figuren 1 bis 3 dargestellt.

Die Vorrichtung 18 kann die Etikettiervorrichtung 14 und die Verpackungsvorrichtung 16 miteinander verbinden. Die Vorrichtung 18 kann die Behälter 12 von der Etikettiervorrichtung 14 empfangen. Die Vorrichtung 18 kann die Behälter 12 zu der Verpackungsvorrichtung 16 transportieren.

Die Vorrichtung 18 weist einen ersten Behälterförderer 20, einen zweiten Behälterförderer 22 und eine Transferstation 24 auf. Die Vorrichtung 18 kann eine Steuereinrichtung (nicht in den Figuren 1 bis 3 dargestellt) aufweisen, die dazu konfiguriert sein kann, den ersten Behälterförderer 20, den zweiten Behälterförderer 22 und/oder die Transferstation 24 entsprechend deren hierin erläuterten Funktionen zu betreiben.

Bevorzugt kann der erste Behälterförderer 20 ein umlaufender Behälterförderer sein. Beispielsweise kann der erste Behälterförderer 20 einen im Wesentlichen ovalen Verlauf aufweisen, wie in den Figuren 1 bis 3 dargestellt ist. Der Umlauf kann bspw. in einer Horizontalebene (wie dargestellt ist) oder einer Vertikalebene ausgerichtet sein.

Der erste Behälterförderer 20 kann, vorzugsweise direkt, stromabwärts von der Etikettiervorrichtung 14 angeordnet sein. Der erste Behälterförderer 20 kann die Behälter 12 von der Etikettiervorrichtung 14 empfangen. Der erste Behälterförderer 20 kann die Behälter 12 beispielsweise mit einem vorbestimmten Teilungsabstand von X mm (z. B. 126 mm) empfangen. Es ist möglich, dass der Behälterstrom Lücken aufweist, die bspw. durch ein Ausschleusen von fehlerhaften Behältern stromauf des ersten Behälterförderers 20 bedingt ist.

Der erste Behälterförderer 20 kann direkt stromaufwärts von der Transferstation 24 angeordnet sein. Der erste Behälterförderer 20 kann die Behälter 12 zu der Transferstation 24 fördern. Während des Transports zu der Transferstation 24 können die Behälter 12 von dem ersten Behälterförderer 20 in ihrer Ausrichtung zueinander angepasst (z. B. gedreht), in ihren Abständen zueinander angepasst und/oder zu Gruppen aus zwei oder mehr Behältern 12 gruppiert werden.

Vorzugsweise kann der erste Behälterförderer 20 die Behälter 12 unabhängig voneinander und/oder einzeln transportieren. Besonders bevorzugt kann der erste Behälterförderer 20 dazu ausgebildet sein, einen Relativabstand zwischen den transportierten Behälter 12 anzupassen. Vorzugsweise können die Abstände zwischen benachbarten Behältern 12 derart von dem ersten Behälterförderer 20 angepasst werden, dass benachbarte Behälter 12 auf dem ersten Behälterförderer 20 einen vorgebbaren Relativabstand zueinander einnehmen.

Der erste Behälterförderer 20 kann beispielsweise als ein Langstator-Linearantrieb-Förderer oder ein Kurzstator-Linearantrieb-Förderer ausgebildet sein, wie in den Figuren 1 bis 3 dargestellt ist. Der Langstator-Linearantrieb-Förderer oder Kurzstator-Linearantrieb-Förderer kann mehrere Bewegungsvorrichtungen bzw. mover oder shuttles zum Behältertransport aufweisen (nicht im Detail den Figuren 1 bis 3 dargestellt). Jede Bewegungsvorrichtung kann einen oder mehrere Behälter 12 transportieren. Die Bewegungsvorrichtungen können entlang einer bevorzugt umlaufenden Führungsbahn 26 geführt sein, z. B. mittels Rollen oder Gleitschuhen. Die Bewegungsvorrichtungen können unabhängig voneinander entlang der Führungsbahn 26 angetrieben werden. Die Bewegungsvorrichtungen können mittels magnetischer Wechselwirkung zwischen Permanentmagneten und Elektromagneten (= Kurzstator oder Langstator) angetrieben werden. Beim Langstator-Linearantrieb-Förderer können die Bewegungsvorrichtungen die Permanentmagnete aufweisen, und entlang der Führungsbahn 26 können die Elektromagnete bspw. in mehreren Langstatorsegmenten angeordnet sein. Beim Kurzstator-Linearantrieb-Förderer können die Bewegungsvorrichtungen die Elektromagnete aufweisen, und entlang der Führungsbahn 26 können die Permanentmagnete angeordnet sein.

Alternativ kann der erste Behälterförderer 20 beispielsweise als ein Planarmotor-Förderer ausgebildet sein (nicht in den Figuren 1 bis 3 dargestellt). Der Planarmotor-Förderer kann mehrere Bewegungsvorrichtungen bzw. mover oder shuttles zum Behältertransport mit mindestens zwei Freiheitgraden (x-Richtung und y-Richtung) aufweisen. Die Bewegungsvorrichtungen können bevorzugt über eine planare Antriebsfläche mittels magnetischer Wechselwirkung mit der Antriebsfläche unabhängig voneinander bewegt werden. Es ist auch möglich, dass zusätzlich eine Hubbewegung (z-Richtung) und/oder eine Neigebewegung der Bewegungsvorrichtungen relativ zu der Antriebsfläche mittels der magnetischen Wechselwirkung möglich ist. Bevorzugt kann die Antriebsfläche horizontal oder vertikal ausgerichtet sein. Jede Bewegungsvorrichtung kann einen oder mehrere Behälter transportieren.

Es ist möglich, dass ein weiterer (dritter) Behälterförderer umfasst ist (nicht in den Figuren dargestellt). Der weitere Behälterförderer kann über, neben oder unter dem ersten Behälterförderer angeordnet sein. Der weitere Behälterförderer kann prinzipiell so ausgebildet sein, wie bereits für den ersten Behälterförderer 20 erläutert wurde. Der weitere Behälterförderer kann bspw. genutzt werden, um eine Leistung zu erhöhen. Alternativ kann der weitere Behälterförderer bspw. dazu ausgebildet sein, Behälter mit einem anderen Behälterformat als der erste Behälterförderer 20 zu transportieren. Vorzugsweise kann auf diese Weise eine Behälterformatumstellung ohne Umrüsten in diesem Bereich der Vorrichtung 18 ermöglicht werden.

Bevorzugt kann der zweite Behälterförderer 22 ein umlaufender Behälterförderer sein. Beispielsweise kann der zweite Behälterförderer 22 einen im Wesentlichen ovalen Verlauf aufweisen, wie in den Figuren 1 bis 3 dargestellt ist. Der Umlauf kann bspw. in einer Horizontalebene oder einer Vertikalebene (wie dargestellt ist) ausgerichtet sein.

Der zweite Behälterförderer 22 kann direkt stromabwärts von der Transferstation 24 angeordnet sein. Der zweite Behälterförderer 22 kann die Behälter 12 von der Transferstation 24 empfangen.

Der zweite Behälterförderer 22 kann direkt stromaufwärts von der Verpackungsvorrichtung 16 angeordnet sein. Der zweite Behälterförderer 22 kann die Behälter 12 zu der Verpackungsvorrichtung 16 fördern. Während des Transports zu der Verpackungsvorrichtung 16 können die Behälter 12 vorzugsweise gepuffert werden, wenn gewünscht, z. B. durch Aufstauen der Behälter 12.

Der zweite Behälterförderer 22 weist mehrere, vorzugweise plattenförmige, Träger 28 zum Transportieren der Behälter 12 auf. Die Träger 28 sind bevorzugt als sogenannte Pucks, vorzugsweise Gebindepucks (Pucks für jeweils mehrere Behälter), ausgeführt. Die Pucks können jeweils einen oder mehrere Behälter 12 tragen.

Die Träger 28 können jeweils einen oder mehrere Behälteraufnahmen 30, 32 zum Aufnehmen eines oder mehrerer Behälter 12 aufweisen. Vorzugsweise können die mehreren Behälteraufnahmen 30, 32 eine Anzahl von ≥ 2, ≥ 3, ≥ 4, ≥ 5, ≥ 6 oder ≥ 10 aufweisen. Bevorzugt kann die mindestens eine Behälteraufnahme 30, 32 jeweils zum Aufnehmen einer Basis oder Standfläche der Behälter 12 geformt sein. Besonders bevorzugt kann eine Form (z. B. Profil und/oder Kontur) der mindestens einen Behälteraufnahmen 30, 32 an eine Form einer Basis oder Standfläche der Behälter 12 angepasst sein.

Es ist möglich, dass die mehreren Behälteraufnahmen 30, 32 gleich ausgebildet sind. Die Behälteraufnahmen 30, 32 können somit die gleichen Behälterformate aufnehmen.

Alternativ können beispielsweise mindestens eine erste Behälteraufnahme 30 und mindestens eine zweite Behälteraufnahme 32 je Träger 28 umfasst sein. Die mindestens eine erste Behälteraufnahme 30 und die mindestens eine zweite Behälteraufnahme 32 können unterschiedlich zueinander ausgebildet, vorzugsweise dimensioniert und/oder geformt, sein. Vorzugsweise kann die mindestens eine erste Behälteraufnahme 30 ein anderes Behälterformat aufnehmen als die mindestens eine zweite Behälteraufnahme 32. Beispielsweise können auf diese Weise unterschiedliche Behälterformate transportiert werden, z. B. 250 ml-Behälter und 350 ml-Behälter.

Beispielsweise können je Träger 28 mehrere erste Behälteraufnahmen 30 und mehrere zweite Behälteraufnahmen 32 umfasst sein. Die ersten Behälteraufnahmen 30 und die zweiten Behälteraufnahmen 32 können an der gleichen Seite (z. B. Oberseite) des jeweiligen Trägers 28 angeordnet sein, z. B. gruppiert nebeneinander wie bspw. in den Figuren 1 bis 3 dargestellt ist. Alternativ können die mehreren ersten Behälteraufnahmen 30 und mehreren zweiten Behälteraufnahmen 34 an unterschiedlichen Seiten des jeweiligen Trägers 28 angeordnet sein, z. B. an einer Oberseite und an einer Unterseite. Eine Behälterformatumstellung kann in diesem Fall lediglich ein Wenden der Träger 28 erfordern.

Die mindestens eine Behälteraufnahme 30, 32 kann vorzugsweise als Vertiefung oder Ausnehmungen in einer Oberseite des jeweiligen Trägers ausgebildet sein. Es versteht sich, dass auch modifizierte Ausführungen der Träger 28 möglich sind.

Die Träger 28 können zusammen mit den darauf positionierten Behältern 12 mittels des zweiten Behälterförderers 22 von der Transferstation 24 zu einem stromabwärtsseitigen Endbereich des zweiten Behälterförderer 22 bewegt werden. An dem stromabwärtsseitigen Endbereich oder stromabwärts davon kann bevorzugt die Verpackungsvorrichtung 16 angeordnet sein. Vorzugsweise kann die Verpackungsvorrichtung 16 die Behälter 12 in dem durch die jeweiligen Träger 28 vorgegebenen Format in Gruppen verpacken, z. B. zu Gebinden. Es ist möglich, dass die Verpackungsvorrichtung 16 die Behälter 12 direkt von den Trägern 28 zum Verpacken entnimmt oder die Behälter 12 direkt auf den Trägern 28 verpackt, z. B. foliert.

Die Träger 28 können, nachdem die Behälter 12 entnommen wurden (z. B. in der Verpackungsvorrichtung 16), zurück zu der Transferstation 24 transportiert werden. Beispielsweise kann ein separater Rückführförderer die Träger 28 zu der Transferstation 24 zurücktransportieren. Der Rückführförderer ist aus Übersichtsgründen nicht in den Figuren 1 bis 3 dargestellt. Alternativ ist es bspw. möglich, dass der zweite Behälterförderer 22 selbst die Träger 28 zumindest teilweise zurück zu der Transferstation 24 transportiert.

Bevorzugt sind die Träger 28 austauschbar in bzw. an dem zweiten Behälterförderer 22 vorgesehen. Bevorzugt können die Träger 28 werkzeuglos austauschbar sein, z. B. durch Entnehmen eines Trägers 28 und Ersetzen des entnommen Trägers 28 durch einen anderen Träger 28. Beispielsweise können die Träger 28 mittels der Transferstation 24 entnommen und/oder mittels der Transferstation 24 an dem zweiten Behälterförderer 22 positionierbar sein. Die Transferstation 24 kann den entnommenen Träger 28 bspw. direkt oder mittelbar zu einer Parkstation oder einem fahrerlosen Transportfahrzeug (engl. AGV - automated guided vehicle) transportieren. Alternativ oder zusätzlich kann die Transferstation 24 einen (anderen) Träger 28 von einer Parkstation oder einem fahrerlosen Transportfahrzeug entnehmen und an dem zweiten Behälterförderer 22 positionieren.

Die Träger 28 können von dem zweiten Behälterförderer 22 pufferbar und/oder aufstaubar sein. Im Einzelnen kann der zweite Behälterförderer 22 als ein Pufferförderer zum wahlweisen Aufstauen der Träger 28 und Lösen eines Staus aus mehreren Trägern 28 ausgebildet sein.

Vorzugsweise weist der zweite Behälterförderer 22 eine derartige Länge auf, um im Bedarfsfall ausreichend Platz zum Puffern einer Anzahl von Behältern 12 bzw. Trägern 28 zu haben. Entsprechend kann der zweite Behälterförderer 22 eine Pufferstrecke aufweisen. Beispielsweise kann eine Transportstreckenlänge des zweiten Behälterförderers 22 größer, vorzugsweise mindestens 50 %, mindestens 70 % oder mindestens 100 % größer, sein als eine Transportstreckenlänge des ersten Behälterförderers 20.

Zum Aufstauen der Träger 28 können diese bevorzugt unabhängig voneinander bewegbar sein. Hierfür können unterschiedliche Konfigurationen des zweiten Behälterförderers 22 vorgesehen sein.

Beispielsweise kann der zweite Behälterförderer 22 ein umlaufendes Förderelement 34 aufweisen. Das Förderelement 34 kann vorzugsweise ein Förderband, einen Fördergurt, einen Förderriemen oder eine Förderkette, z. B. Scharbierbandkette, aufweisen. Die mehreren Träger 28 können von dem Förderelement 34 getragen sein. Vorzugsweise können die Träger 28 lose auf dem Förderelement 34 aufliegen, sodass sie bevorzugt durch Aufstauen der Träger 28 pufferbar sind.

Alternativ kann der zweite Behälterförderer 22 beispielsweise als ein Langstator-Linearantrieb-Förderer, ein Kurzstator-Linearantrieb-Förderer oder ein Planarmotor-Förderer ausgebildet sein (nicht in den Figuren 1 bis 3 dargestellt).

Der Langstator-Linearantrieb-Förderer oder Kurzstator-Linearantrieb-Förderer kann mehrere Bewegungsvorrichtungen bzw. mover oder shuttles zum Behältertransport aufweisen. Die Bewegungsvorrichtungen können die Träger 28 bilden bzw. aufweisen. Die Bewegungsvorrichtungen können entlang einen bevorzugt umlaufenden Führungsbahn geführt sein, z. B. mittels Rollen oder Gleitschuhen. Die Bewegungsvorrichtungen können unabhängig voneinander entlang der Führungsbahn angetrieben werden. Die Bewegungsvorrichtungen können mittels magnetischer Wechselwirkung zwischen Permanentmagneten und Elektromagneten (= Kurzstator oder Langstator) angetrieben werden. Beim Langstator-Linearantrieb-Förderer können die Bewegungsvorrichtungen die Permanentmagnete aufweisen, und entlang der Führungsbahn können die Elektromagnete bspw. in mehreren Langstatorsegmenten angeordnet sein. Beim Kurzstator-Linearantrieb-Förderer können die Bewegungsvorrichtungen die Elektromagnete aufweisen, und entlang der Führungsbahn können die Permanentmagnete angeordnet sein.

Der Planarmotor-Förderer kann mehrere Bewegungsvorrichtungen bzw. mover oder shuttles zum Behältertransport mit mindestens zwei Freiheitgraden (x-Richtung und y-Richtung) aufweisen. Die Bewegungsvorrichtungen können die Träger 28 bilden bzw. aufweisen. Die Bewegungsvorrichtungen können bevorzugt über eine planare Antriebsfläche mittels magnetischer Wechselwirkung mit der Antriebsfläche unabhängig voneinander bewegt werden. Es ist auch möglich, dass zusätzlich eine Hubbewegung (z-Richtung) und/oder eine Neigebewegung der Bewegungsvorrichtungen relativ zu der Antriebsfläche mittels der magnetischen Wechselwirkung möglich ist. Bevorzugt kann die Antriebsfläche horizontal oder vertikal ausgerichtet sein.

Die Transferstation 24 kann die Behälter 12 von dem ersten Behälterförderer 20 entnehmen. Die Behälter 12 können beispielsweise jeweils einzeln oder zu mehreren von der Transferstation 24 gegriffen werden. Die Transferstation 24 positioniert die entnommenen Behälter 12 auf den Trägern 28 des zweiten Behälterförderers 22. Beispielsweise können die gegriffenen Behälter 12 von der Transferstation 24 auf den Trägern 28 positioniert und dort freigegeben werden. Vorzugsweise können sich die Träger 28 in einer Förderrichtung des zweiten Behälterförderers 22 bewegen, während die Transferstation 24 die Behälter 12 auf den Trägern 28 positioniert.

Die Transferstation 24 kann auch als eine Umsetzstation zum Umsetzen der Behältern 12 von dem ersten Behälterförderer 20 zu dem zweiten Behälterförderer 22 bezeichnet werden.

Die Transferstation 24 kann bezüglich des Behälterstroms direkt stromabwärts von dem ersten Behälterförderer 20 und direkt stromaufwärts von dem zweiten Behälterförderer 22 angeordnet sein.

Die Transferstation 24 kann, wenn gewünscht, die von dem ersten Behälterförderer 20 entnommenen Behälter 12 in eine vorgebbare Orientierung neu ausrichten.

Eine Position der von dem ersten Behälterförderer 20 zu entnehmenden Behälter 12 kann bspw. aus Steuerungsdaten ausgelesen oder abgeleitet werden, z. B. wenn der erste Behälterförderer 20 als ein Langstator-Linearantrieb-Förderer, ein Kurzstator-Linearantrieb-Förderer oder ein Planarmotor-Förderer ausgebildet ist. Alternativ oder zusätzlich kann die Vorrichtung 18 eine Sensorik zur Positionserfassung der Behälter 12 auf dem ersten Behälterförderer 20 aufweisen. Beispielsweise kann die Sensorik optisch, vorzugsweise kameragestützt, sein.

Eine Position der Träger 28 des zweiten Behälterförderer 22 zum Positionieren der entnommenen Behälter 12 kann bspw. aus Steuerungsdaten ausgelesen oder abgeleitet werden, z. B. wenn der zweite Behälterförderer 22 als ein Langstator-Linearantrieb-Förderer, ein Kurzstator-Linearantrieb-Förderer oder ein Planarmotor-Förderer ausgebildet ist. Alternativ oder zusätzlich kann die Vorrichtung 18 eine Sensorik zur Positionserfassung der Träger 28 auf dem zweiten Behälterförderer 22 aufweisen. Beispielsweise kann die Sensorik optisch, vorzugsweise kameragestützt, sein.

Bevorzugt weist die Transferstation 24 mindestens eine Robotervorrichtung 36, 38, 40 auf. Die mindestens eine Robotervorrichtung 36, 38, 40 kann die Behälter 12 von dem ersten Behälterförderer 20 entnehmen und auf den Trägern 28 des zweiten Behälterförderers 22 positionieren. Vorzugsweise weist die mindestens eine Robotervorrichtung 36, 38, 40 jeweils mindestens einen Greifer zum Entnehmen der Behälter 12 von dem ersten Behälterförderer 20 und zum Freigeben der gegriffenen Behälter 12 bei den Trägern 28 auf.

Die mindestens eine Robotervorrichtung 36, 38, 40 kann beispielsweise als ein Knickarmroboter ausgeführt sein, wie in den Figuren 1 bis 3 dargestellt ist. Alternativ kann die mindestens eine Robotervorrichtung 36, 38, 40 beispielsweise als Deltarobotervorrichtung oder Scararobotervorrichtung ausgebildet sein.

Besonders bevorzugt sind mehrere Robotervorrichtungen 36, 38, 40 umfasst. Die Robotervorrichtungen 36, 38, 40 können vorzugsweise nebeneinander angeordnet sein, z. B. parallel zu einer Längsachse des ersten Behälterförderers 20 und/oder einer Längsachse des zweiten Behälterförderers 22.

Zum Positionieren der von dem ersten Behälterförderer 20 entnommenen Behälter 12 auf den Trägern 28 sind eine Vielzahl von Möglichkeiten denkbar.

Bevorzugt ist hierbei, dass auf die Träger 28 jeweils mindestens ein Behälter 12 von jeder der mehreren Robotervorrichtungen 36, 38, 40 positioniert wird. Die Robotervorrichtungen 36, 38, 40 können jeweils mindestens einen Behälter 12 auf einen der mehreren Träger 28 positionieren. Beispielsweise kann die erste Robotervorrichtung 36 mindestens einen Behälter 12 auf einem Träger 28 positionieren. Die zweite Robotervorrichtung 38 kann mindestens einen Behälter 12 auf demselben Träger 28 positionieren. Optional kann die dritte Robotervorrichtung 40 mindestens einen Behälter 12 auf demselben Träger 28 positionieren.

Bevorzugt ist hierbei ebenfalls, wenn die Transferstation 24 bzw. jede der Robotervorrichtungen 36, 38, 40 in einem Arbeitszyklus mehrere Behälter 12, vorzugsweise gleichzeitig, von dem ersten Behälterförderer 20 entnimmt und die entnommenen Behälter 12, vorzugsweise gleichzeitig, auf mehrere der Träger 28 positioniert. Beispielsweise kann die erste Robotervorrichtung 36 mehrere entnommene Behälter 12 auf zwei, drei oder mehr Träger 28 positionieren.

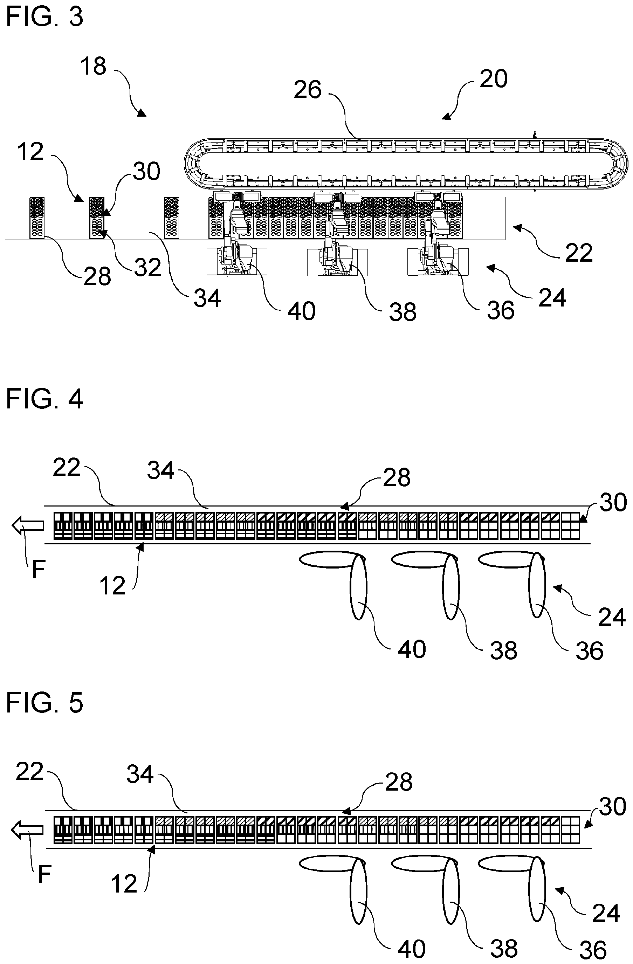

Die Figuren 4 und 5 zeigen rein schematisch zwei beispielhafte Betriebsweisen der Transferstation 24. In beiden Figuren weisen die Träger 28 jeweils eine Aufnahmekapazität von sechs Behältern 12 im Format 3x2 auf. Die von der ersten Robotervorrichtung 36 positionierten Behälter 12 sind mit einer Diagonalschraffur gekennzeichnet. Die von der zweiten Robotervorrichtung 38 positionierten Behälter 12 sind mit einer Vertikalschraffur gekennzeichnet. Die von der dritten Robotervorrichtung 40 positionierten Behälter 12 sind mit einer Horizontalschraffur gekennzeichnet. Behälterpositionierungen von aufeinanderfolgenden Arbeitszyklen sind mit unterschiedlichen Abständen der jeweiligen Schraffurlinien gekennzeichnet (erster Arbeitszyklus: großer Schraffurlinienabstand => zweiter Arbeitszyklus: kleiner Schraffurlinienabstand => dritter Arbeitszyklus: großer Schraffurlinienabstand => usw.). Die Förderrichtung des zweiten Behälterförderers 22 ist mit einem Pfeil F angegeben.

In der beispielhaften Betriebsweise von Figur 4 kann die erste Robotervorrichtung 36 je Arbeitszyklus zehn Behälter 12 auf fünf Trägern 28 positionieren, nämlich zwei Behälter 12 je Träger 28. Die zweite Robotervorrichtung 38 kann je Arbeitszyklus zehn weitere Behälter 12 auf denselben Trägern 28 positionieren, nämlich zwei Behälter 12 je Träger 28. Die dritte Robotervorrichtung 40 kann je Arbeitszyklus zehn weitere andere Behälter 12 auf denselben Trägern 28 positionieren, nämlich zwei Behälter 12 je Träger 28.

In der beispielhaften Betriebsweise von Figur 5 ist die Betriebsweise von Figur 4 derart modifiziert, dass die Träger 28 auf denen die Robotervorrichtungen 36, 38, 40 je Arbeitszyklus zehn Behälter 12 positionieren, zumindest teilweise unterschiedlich sind.

Die Erfindung ist nicht auf die vorstehend beschriebenen bevorzugten Ausführungsbeispiele beschränkt. Vielmehr ist eine Vielzahl von Varianten und Abwandlungen möglich, die ebenfalls von dem Erfindungsgedanken Gebrauch machen und deshalb in den Schutzbereich fallen. Insbesondere beansprucht die Erfindung auch Schutz für den Gegenstand und die Merkmale der Unteransprüche unabhängig von den in Bezug genommenen Ansprüchen. Insbesondere sind die einzelnen Merkmale des unabhängigen Anspruchs 1 jeweils unabhängig voneinander offenbart. Zusätzlich sind auch die Merkmale der Unteransprüche unabhängig von sämtlichen Merkmalen des unabhängigen Anspruchs 1 und beispielsweise unabhängig von den Merkmalen bezüglich des Vorhandenseins und/oder der Konfiguration des ersten Behälterförderers, des zweiten Behälterförderers und/oder der Transferstation des unabhängigen Anspruchs 1 offenbart. Alle Bereichsangaben hierin sind derart offenbart zu verstehen, dass gleichsam alle in den jeweiligen Bereich fallenden Werte einzeln offenbart sind, z. B. auch als jeweils bevorzugte engere Außengrenzen des jeweiligen Bereichs.

### Bezugszeichenliste

- 10: Behälterbehandlungsanlage
- 12: Behälter
- 14: Etikettiervorrichtung
- 16: Verpackungsvorrichtung
- 18: Vorrichtung zum Fördern von Behältern
- 20: erster Behälterförderer
- 22: zweiter Behälterförderer
- 24: Transferstation
- 26: Führungsbahn
- 28: Träger
- 30: erste Behälteraufnahme
- 32: zweite Behälteraufnahme
- 34: Förderelement
- 36: erste Robotervorrichtung
- 38: zweite Robotervorrichtung
- 40: dritte Robotervorrichtung
- F: Förderrichtung

## Patentansprüche

1. Vorrichtung (18) zum Fördern von Behältern (12) für eine Behälterbehandlungsanlage (10), aufweisend:
einen ersten, vorzugsweise umlaufenden, Behälterförderer (20);
einen zweiten, vorzugsweise umlaufenden, Behälterförderer (22), der mehrere, vorzugweise plattenförmige, Träger (28) zum Transportieren der Behälter (12) aufweist;
eine Transferstation (24), mittels der die Behälter (12) von dem ersten Behälterförderer (20) entnehmbar und auf den mehreren Trägern (28) des zweiten Behälterförderers (22) positionierbar sind.

2. Vorrichtung (18) nach Anspruch 1, wobei:
die mehreren Träger (28) jeweils mehrere Behälteraufnahmen (30, 32) zum Aufnehmen mehrerer der Behälter (12) aufweist, wobei vorzugsweise eine Anzahl der mehreren Behälteraufnahmen ≥ 2, ≥ 3, ≥ 4, ≥ 5, ≥ 6 oder ≥ 10 ist.

3. Vorrichtung (18) nach Anspruch 2, wobei:
die mehreren Behälteraufnahmen (30, 32) eine oder mehrere, vorzugsweise gruppierte, erste Behälteraufnahmen (30) und eine oder mehrere, vorzugsweise gruppierte, zweite Behälteraufnahmen (32) aufweist; und
die eine oder die mehreren ersten Behälteraufnahmen (30) einerseits und die eine oder die mehreren zweiten Behälteraufnahmen (32) andererseits unterschiedlich zueinander ausgebildet, vorzugsweise dimensioniert und/oder geformt, sind.

4. Vorrichtung (18) nach Anspruch 2 oder Anspruch 3, wobei:
die mehreren Behälteraufnahmen (30, 32) als Vertiefungen oder Ausnehmungen in einer Oberseite des jeweiligen Trägers (28) ausgebildet sind.

5. Vorrichtung (18) nach einem der vorherigen Ansprüche, wobei:
der zweite Behälterförderer (22) ein umlaufendes Förderelement (34), vorzugsweise Förderband, Fördergurt, Förderriemen oder Förderkette, aufweist; und
die mehreren Träger (28) auf dem Förderelement (34) getragen sind, vorzugsweise lose aufliegend, pufferbar und/oder aufstaubar.

6. Vorrichtung (18) nach einem der vorherigen Ansprüche, wobei mindestens eines der nachfolgenden Merkmale erfüllt ist:
die mehreren Träger (28) sind als Pucks, vorzugsweise Gebindepucks, ausgeführt;
die mehreren Träger (28) sind von dem zweiten Behälterförderer (22) pufferbar und/oder aufstaubar;
der zweite Behälterförderer (22) ist als ein Pufferförderer zum wahlweisen Aufstauen der mehreren Träger (28) und Lösen eines Staus aus den mehreren Trägern (28) ausgebildet;
der zweite Behälterförderer (22) weist eine Pufferstrecke auf; und
eine Transportstreckenlänge des zweiten Behälterförderers (22) ist größer, vorzugsweise mindestens 50 %, mindestens 70 % oder mindestens 100 % größer, als eine Transportstreckenlänge des ersten Behälterförderers (20).

7. Vorrichtung (18) nach einem der vorherigen Ansprüche, wobei:
die mehreren Träger (28) unabhängig voneinander bewegbar sind; und/oder
der zweite Behälterförderer (22) als ein Langstator-Linearantrieb-Förderer, ein Kurzstator-Linearantrieb-Förderer oder ein Planarmotor-Förderer ausgebildet ist und die mehreren Träger (28) als unabhängig voneinander bewegbare Bewegungsvorrichtungen des Langstator-Linearantrieb-Förderers, des Kurzstator-Linearantrieb-Förderers oder des Planarmotor-Förderers ausgebildet sind.

8. Vorrichtung (18) nach einem der vorherigen Ansprüche, wobei:
die mehreren Träger (28), vorzugsweise werkzeuglos, austauschbar sind; und/oder
die mehreren Trägern (28) mittels der Transferstation (24) aus dem zweiten Behälterförderer (22) entnehmbar und vorzugsweise zu einer Parkstation oder einem fahrerlosen Transportfahrzeug transportierbar sind; und/oder
die mehreren Träger (28) mittels der Transferstation (24) an dem zweiten Behälterförderer (22) positionierbar sind, vorzugsweise übernommen von einer Parkstation oder einem fahrerlosen Transportfahrzeug.

9. Vorrichtung (18) nach einem der vorherigen Ansprüche, wobei:
die Transferstation (24) dazu ausgebildet ist, die Behälter (12) von dem ersten Behälterförderer (20) zu greifen und die gegriffenen Behälter (12) auf den Trägern (28) zu positionieren; und/oder
die Transferstation (24) dazu ausgebildet ist, die von dem ersten Behälterförderer (20) entnommenen Behälter (12) in eine vorgebbare Orientierung neu auszurichten; und/oder
die Transferstation (24) dazu ausgebildet ist, in einem Arbeitszyklus mehrere der Behälter (12), vorzugsweise gleichzeitig, von dem ersten Behälterförderer (20) zu entnehmen und die entnommenen Behälter (12), vorzugsweise gleichzeitig, auf mehrere der Träger (28) zu positionieren, vorzugsweise gleichzeitig.

10. Vorrichtung (18) nach einem der vorherigen Ansprüche, wobei:
die Transferstation (24) mindestens eine Robotervorrichtung (36, 38, 40), vorzugsweise Knickarmrobotervorrichtung, Deltarobotervorrichtung oder Scararobotervorrichtung, zum Entnehmen der Behälter (12) von dem ersten Behälterförderer (20) und zum Positionieren der Behälter (12) auf den mehreren Trägern (28) des zweiten Behälterförderers (22) aufweist, und optional
die mindestens eine Robotervorrichtung (36, 38, 40) einen Greifer zum Ergreifen eines oder mehrerer der Behälter (12) von dem ersten Behälterförderer (20) aufweist.

11. Vorrichtung (18) nach Anspruch 10, wobei:
die mindestens eine Robotervorrichtung (36, 38, 40) mehrere Robotervorrichtungen (36, 38, 40) aufweist, die nebeneinander angeordnet sind, vorzugsweise parallel zu einer Längsachse des ersten Behälterförderers (20) und/oder einer Längsachse des zweiten Behälterförderers (22).

12. Vorrichtung (18) nach Anspruch 11, ferner aufweisend:
eine Steuereinrichtung, die dazu konfiguriert ist, die mehreren Robotervorrichtungen (36, 38, 40) derart zu betreiben, dass:
- mindestens zwei der mehreren Robotervorrichtungen (36, 38, 40) jeweils mindestens einen Behälter (12) auf einen gemeinsamen Träger (28) der mehreren Träger (28) positionieren; und/oder
- die mehreren Robotervorrichtungen (36, 38, 40) jeweils in einem Arbeitszyklus mehrere der Behälter (12), vorzugsweise gleichzeitig, von dem ersten Behälterförderer (20) entnehmen und die entnommenen Behälter (12), vorzugsweise gleichzeitig, auf mehrere der Träger (28) positionieren.

13. Vorrichtung (18) nach einem der vorherigen Ansprüche, wobei:
der erste Behälterförderer (20) als ein Langstator-Linearantrieb-Förderer, ein Kurzstator-Linearantrieb-Förderer oder ein Planarmotor-Förderer ausgebildet ist; und/oder
der erste Behälterförderer (20) dazu ausgebildet ist, einen Relativabstand der von dem ersten Behälterförderer (20) transportierten Behälter (12) anzupassen, vorzugsweise zum Einnehmen eines vorgebbaren Relativabstands zwischen benachbarten Behältern (12).

14. Behälterbehandlungsanlage (10) mit einer Vorrichtung (18) zum Fördern von Behältern (12) nach einem der vorherigen Ansprüche, ferner aufweisend:
eine Etikettiervorrichtung (14) zum Etikettieren der Behälter (12), die, vorzugsweise direkt stromaufwärts von dem ersten Behälterförderer (20) angeordnet ist; und/oder
eine Verpackungsvorrichtung (16) zum Verpacken der Behälter (12), die, vorzugsweise direkt, stromabwärts von dem zweiten Behälterförderer (22) angeordnet und bevorzugt dazu ausgebildet ist, die Behälter (12) in dem durch die mehreren Träger (28) vorgegebenen Format in Gruppen zu verpacken.

15. Verwendung einer Vorrichtung (18) nach einem der Ansprüche 1 bis 13 oder einer Behälterbehandlungsanlage (10) nach Anspruch 14 zum Fördern von Behältern (12), wobei die Behälter (12) jeweils eine Standfläche aufweisen, die länglich ist, wobei vorzugsweise eine Länge der Standfläche der Behälter (12) mindestens 50 %, mindestens 70 % oder mindestens 100 % größer als eine Breite der Standfläche der Behälter (12) ist.
